Europäisches Patentamt

European Patent Office

Office européen des brevets

(11) Publication number : **0 421 489 B1**

(12) **EUROPEAN PATENT SPECIFICATION**

(45) Date of publication of patent specification :
15.02.95 Bulletin 95/07

(51) Int. Cl.⁶ : **G11B 5/39**, G11B 5/027

(21) Application number : 90123594.5

(22) Date of filing : 28.02.85

(54) **Magnetic transducer head utilizing the magnetoresistance effect.**

Divisional application 93100342.0 filed on 28/02/85.

(30) Priority : **01.03.84 JP 38980/84**
**08.06.84 JP 117625/84**
**24.08.84 JP 176476/84**
**28.08.84 JP 178833/84**
**28.08.84 JP 178831/84**

(43) Date of publication of application :
**10.04.91 Bulletin 91/15**

(45) Publication of the grant of the patent :
**15.02.95 Bulletin 95/07**

(84) Designated Contracting States :
**DE FR GB NL**

(56) References cited :
GB-A- 2 037 474
US-A- 4 321 685
IBM TECHNICAL DISCLOSURE BULLETIN vol. 19, no. 8, January 1977, SCHWARZ:"SIGNAL SAMPLING OF PULSE-BIASED MR HEAD"
PATENT ABSTRACTS OF JAPAN vol. 7, no. 58 (E-163)(1203) 10 March 1983 & JP-A-57 206145
IBM TECHNICAL DISCLOSURE BULLETIN vol. 21, no. 8, January 1979, SCHWARZ:"AUTOMATIC BIAS CONTROL FOR MR HEADS"

(60) Publication number of the earlier application in accordance with Art. 76 EPC : **0 154 307**

(73) Proprietor : **SONY CORPORATION**
**7-35, Kitashinagawa 6-chome**
**Shinagawa-ku**
**Tokyo (JP)**

(72) Inventor : **Imakoshi, Shigeyoshi, c/o Sony Corporation**
**7-35, Kitashinagawa 6-chome**
**Shinagawa-ku, Tokyo (JP)**
Inventor : **Suyama, Hideo, c/o Sony Corporation**
**7-35, Kitashinagawa 6-chome**
**Shinagawa-ku, Tokyo (JP)**
Inventor : **Soda, Yutaka, c/o Sony Corporation**
**7-35, Kitashinagawa 6-chome**
**Shinagawa-ku, Tokyo (JP)**
Inventor : **Fukuyama, Munekatsu, c/o Sony Corporation**
**7-35, Kitashinagawa 6-chome**
**Shinagawa-ku, Tokyo (JP)**
Inventor : **Iida, Yasuhiro, c/o Sony Corporation**
**7-35, Kitashinagawa 6-chome**
**Shinagawa-ku, Tokyo (JP)**

(74) Representative : **TER MEER - MÜLLER - STEINMEISTER & PARTNER**
**Mauerkircherstrasse 45**
**D-81679 München (DE)**

## Description

The present invention relates to a magnetic transducer head apparatus utilizing the magnetoresistance effect.

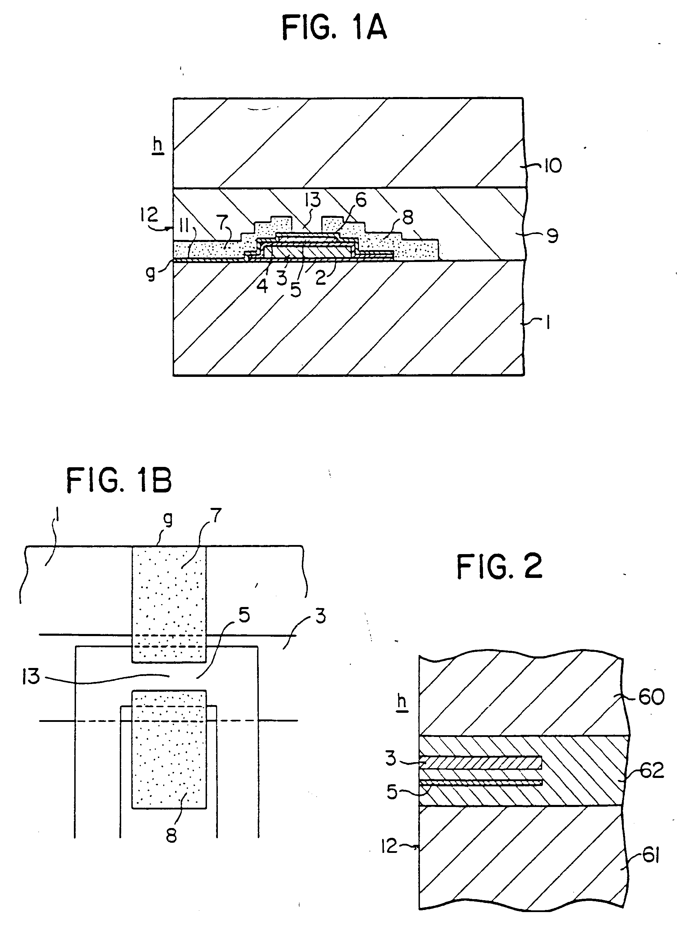

A magnetoresistance (hereinafter referred to as "MR" effect) effect type magnetic head apparatus has a head member h with structure as shown in Fig. 1A and Fig. 1B. Fig. 1A is a sectional view of essential part of an MR head, and Fig. 1B is a plan view thereof. On a magnetic substrate 1 of Ni-Zn ferrite or Mn-Zn ferrite, or through an insulating layer 2 of $SiO_2$ etc. on the substrate 1 if it is conductive, a bias conductor 3 of band-shaped conductive film is applied and constitutes a bias magnetic field generating current passage to apply a bias magnetic field to an MR sensing element as hereinafter described. An MR sensing element 5 comprising a MR magnetic thin film of Ni-Fe alloys or Ni-Co alloys is arranged on the bias conductor 3 through an insulating layer 4. A pair of magnetic layers 7 and 8 of Mo permalloy or the like to constitute a magnetic core of part of a magnetic circuit are formed so that the magnetic layers 7 and 8 ride at each one end on the MR sensing element 5 through a thin insulating layer 6 and extend across the bias conductor 3 and the MR sensing element 5. A protective substrate 10 is provided on the substrate 1 through a non-magnetic protective layer 9. An operating magnetic gap g is formed between one magnetic layer 7 and the front end of the substrate 1 through a non-magnetic gap spacer' layer 11 comprising, for example, the insulating layer 6 having a required thickness. Front surface of the substrate 1, the gap spacer layer 11, the magnetic layer 7, the protective layer 9 and the protective substrate 10 is polished thereby an opposing surface 12 to a magnetic recording medium is formed for the magnetic gap g to face thereto. The rear end of the magnetic layer 7 which constitutes the magnetic gap g and the front end of other magnetic layer 8 are formed to ride on the MR sensing element 5 through the insulating layer 6, and both ends are spaced from each other by a discontinuous portion 13. The rear end of the magnetic layer 7 and the front end of the magnetic layer 8 are electrically insulated from the MR sensing element 5 by the insulating layer 6 but magnetically connected. The discontinuous portion 13 between both magnetic layers 7 and 8 is magnetically connected by the MR sensing element 5, so that a magnetic circuit is formed around the substrate 1 - the magnetic gap g - the magnetic layer 7 - the MR sensing element 5 - the magnetic layer 8 - the substrate 1.

Fig. 2 shows an enlarged sectional view of a MR type head apparatus of so-called shield type as another example. In the head apparatus of Fig. 2, a bias conductor 3 and an MR sensing element 5 opposed thereto are disposed between high permeability magnetic bodies 60 and 61 such as ferrite through a non-magnetic layer 62, and one end surface is polished so as to form a tape opposing surface 12.

In such a MR type magnetic head apparatus, signal magnetic flux from the front gap g opposed to the magnetic recording medium flows in the MR element through the above-mentioned magnetic circuit in case of the MR head of Fig. 1A, or directly in the MR element in case of Fig. 2, whereby the resistance value of the MR sensing element 5 varies in response to the external magnetic field by the signal magnetic flux. Variation of the resistance value is detected as voltage variation across the MR sensing element 5, while a sensing current flows through the MR sensing element 5 thereby reproduction of the recording signal on the magnetic recording medium is effected. In this case, the MR sensing element 5 must be magnetically biased in order that the MR sensing element 5 acts linearly as a magnetic sensor of high sensitivity. The bias magnetic field is applied by a magnetic field generated by energizing the bias conductor 3 and a magnetic field generated by the detecting current itself flowing through the MR sensing element 5.

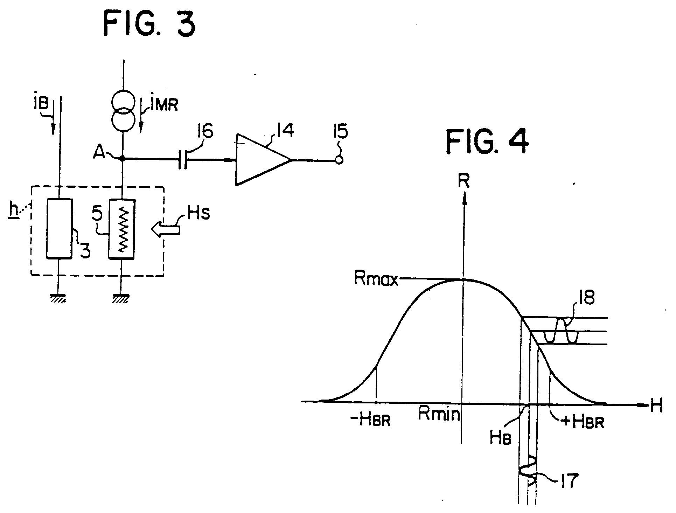

In the MR type magnetic head apparatus as clearly seen in a schematic constitution of Fig. 3, the MR sensing element 5 is applied with the magnetic field generated, while a prescribed d.c. current $i_B$ flows through the bias conductor 3, and at the same time a prescribed sensing current $i_{MR}$ flows through the MR sensing element 5. In such a state, the MR sensing element 5 is applied with a bias magnetic field $H_B$ composed of the magnetic field generated by energizing the bias conductor 3 and the magnetic field generated by the detecting current flowing through the MR sensing element 5.

If under such bias condition the signal magnetic field $H_S$ is applied from the magnetic recording medium, the voltage across the MR sensing element 5 on the basis of resistance variation by the signal magnetic field $H_S$, i. e. variation of potential at point A, is amplified by an amplifier 14 and detected at an output terminal 15. Numerals 16 designates a coupling condensor.

Fig. 4 shows a working characteristic curve of the MR sensing element 5 illustrating the relation between the magnetic field H and the resistance value R. It is clear from Fig. 4 that the resistance R follows a parabolic curve that is convex upwards in the range of the magnetic field H and small in absolute value, i.e. $-H_{BR} \sim +H_{BR}$. The parabolic curve of the resistance R gradually approaches the value $R_{min}$ when the magnetization of the MR magnetic thin film at a center portion becomes saturated in the magnetic circuit direction. Maximum value $R_{max}$ of the resistance R means a state without external field acting on the MR magnetic thin film. The bias magnetic field $H_B$ is applied at a characteristic portion according to the parabolic working characteristic curve, and the signal magnetic field shown by numeral 17 in Fig. 4 is applied from the magnetic recording medium. Corresponding to the signal magnetic field, an output according to variation of the resistance value as shown by numeral 18 in Fig. 4 is obtained. In this case, however, a stronger signal magnetic field results in a higher second harmonic distortion.

In the MR type magnetic head apparatus, the potential at point A of Fig. 3 is determined by the composition of a fixed component and a variable component of the resistance in the MR sensing element 5. Since the fixed component in this case attains about 98% and is largely dependent on temperature, the temperature drift of the potential at point A becomes large. The resistance value R in the MR sensing element 5 is represented by the following formula.

$$R = R_0(1 + \alpha\cos^2\theta) \quad (1)$$

wherein $R_0$ stands for the fixed component of resistance, $\alpha$ stands for maximum resistance variation factor, $\theta$ indicates the angle between the current direction and the magnetizing direction in the MR sensing element 5. For example, if the MR sensing element 5 is an MR magnetic thin film of 81Ni-19Fe alloy (permalloy) with a thickness of 25 nm, the measured value of $\alpha$ becomes about $\alpha = 0.017$. The value of or $\alpha$ in this case is dependent more or less on the thickness or the material of the MR magnetic thin film of the MR sensing element 5, and becomes about $\alpha = 0.05$ at most. On the other hand, $R_0$ is represented by the following formula.

$$R_0 = R_i(1 + a\Delta t) \quad (2)$$

wherein $R_i$ stands for the initial value of resistance, a is a temperature coefficient, and $\Delta t$ refers to a temperature variable component.

The measured value of the temperature coefficient a in the above example of the MR sensing element 5 is about $a = 0.0027$/deg. This may produce large noise at detecting the d.c. magnetic field. In order to avoid the temperature dependence in the MR magnetic head apparatus, usually a differential circuit arrangement to cancel the temperature dependence must be provided.

Moreover, in such a MR type magnetic head element, since the temperature coefficient is large as above described, for example, when heat generated by energizing the MR sensing element 5 or by the bias current flow through the bias conductor 3 is radiated unstably by friction of the heat element with the magnetic recording medium such that the head temperature varies, large noise, so-called rubbing noise may be produced.

If the amplifier 14 in Fig. 3 has a low-impedance input, assuming that the cut-off frequency of the capacitor 16 is $f_o$, the required capacitance C for the capacitor 16 becomes

$$C = \frac{1}{R\omega_o} \quad (3)$$

wherein $\omega_o = 2\pi f_o$.

If the MR sensing element 5 is made of permalloy with a thickness of 25 nm and a length of 50 $\mu$m, the resistance value R becomes about 120 $\Omega$. If $f_o = 1$kHz, the value of C must be as large as C = 1.3 $\mu$F. This becomes a problem particularly for a multi-track type magnetic head apparatus.

The permeability in a magnetic circuit, particularly that in the magnetic layers 7 and 8 having relatively small thickness and sectional area, is preferably as large as possible. Since the permeability becomes a maximum when the external magnetic field is zero, application of the above-mentioned bias magnetic field lowers the permeability.

The above-mentioned MR type magnetic head apparatus in a d.c. bias system is advantageous in that the effective track width is large and a narrow track can be easily achieved. On the other hand, it is a disadvantage that the linearity is bad, the d.c. reproduction is difficult, the rubbing noise is large, the Barkhausen noise is large, and the dispersion of the output is large.

A MR type magnetic transducer head apparatus comprising the features of the preamble of claim 1 is described in GB-A-2 037 474. This apparatus operates with analog signals. This makes it difficult to design it for operation in different channels to cooperate with a travelling magnetic recording medium on which a plurality of data channels is recorded.

It is the object of the present invention to provide a MR type magnetic transducer head apparatus which can well be designed for operation with a plurality of channels.

This object is solved by the magnetic transducer head apparatus according to the teaching of the enclosed claim. This apparatus is designed as a digital circuit operating with a special combination of digital filtering and digital multiplexing. Therefore, the circuit scale is not apt to become large in spite of an increase of the number of channels.

Further details of the invention and embodiments thereof will be described by way of examples with reference to the accompanying drawings, in which:

Fig. 1A is an enlarged sectional view of an essential part of a MR magnetic head apparatus of the yoke type;

Fig. 1B is a plan view of the magnetic head apparatus in Fig. 1A;

| Fig. 2 | is an enlarged sectional view of an essential part of a MR magnetic head apparatus of shield type; |
|---|---|
| Fig. 3 | is an equivalent circuit diagram illustrating a MR magnetic head apparatus in the prior art; |
| Fig. 4 | is a diagram of a MR characteristic curve illustrating operation of a MR head apparatus in the prior art; |
| Figs. 5 | is a circuit diagram including and illustrating the constitution of an MR magnetic head apparatus of a first basic embodiment; |
| Fig. 6(A) and (B) | a time correlated wave form chart illus trating the operation of the MR magnetic head apparatus of Fig. 5; |
| Fig. 7 | is a circuit diagram including and illustrating the constitution of a multi-channel MR magnetic head apparatus as a further basic embodiment; |
| Fig. 8(A), (B), (C) | wave form charts illustrating the operation of the multi-channel MR magnetic head apparatus of Fig. 7; |
| Fig. 9 | a circuit diagram including and illustrating the constitution of a multi-channel MR magnetic head apparatus as an embodiment of the invention with improved signal processing; and |
| Fig. 10(A), (B), (C) | wave form charts illustrating the operation of the multi-channel MR magnetic head apparatus of Fig. 9. |

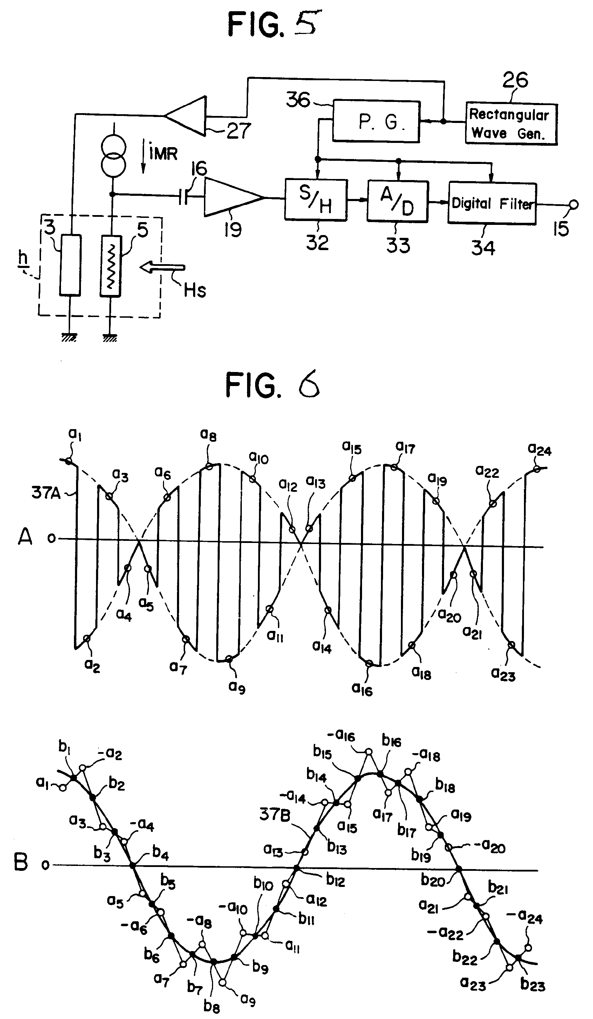

A basic embodiment of a MR head apparatus will now be described in detail referring to Fig. 5. In this embodiment, constitution of a head element h is similar to Fig. 1 and Fig. 3 as already described. Numeral 26 designates a rectangular wave generator (or sine wave generator) as an a.c. signal generator, and rectangular wave signal with frequency $f_c$ from the rectangular wave generator 26 is supplied to a current driver 27 and a rectangular wave current from the current driver 27 flows through a bias conductor 3.

The output from the MR sensing element 5 passes through the capacitor 16 and the amplifier 19, whereby a rectangular wave signal 37A as shown in Fig. 6A is obtained at output of the amplifier 19.

The rectangular wave signal 37A is supplied to a sample hold circuit 32 for sample hold operation. A sample pulse signal is produced on the basis of the pulse signal from a pulse generator 36 and in synchronization therewith having a prescribed phase and prescribed time width. The pulse generator 36 generates a pulse signal in synchronization with the rectangular wave signal from the rectangular wave generator 26 and having a double frequency $2f_c$ in comparison to the rectangular wave signal. The pulse signal is supplied as sample pulse to the sample hold circuit. In Fig. 6A, each of symboles $a_1$, $a_2$, ..., $a_{24}$, ... shows a sampling point and value on the respective point.

The output of the sample hold circuit 32 is supplied to an A/D converter 33 and converted into a digital signal. The output of the A/D converter is supplied to a digital filter 34. The pulse signal from the pulse generator 36 is supplied to the A/D converter 33 and the digital filter 34.

Next, the function of the digital filter 34 will be described. In the digital filter 34 as shown in Figs. 6A, B, the sign of every alternate digital value among the digital values from the A/D converter 33 corresponding to the sample values $a_1$ - $a_{24}$ in the sample hold circuit 32, for example, the digital values corresponding to the sample values $a_2$, $a_4$, $a_6$, ..., $a_{22}$, $a_{24}$, ..., is inverted into the digital values corresponding to the sample values $a_1$, $-a_2$, $a_3$, $-a_4$, $a_5$, $-a_6$, ..., $a_{21}$, $-a_{22}$, ..., and arithmetic mean values of neighboring digital values corresponding to the inversion are taken and smoothed. Thus, the output of the digital filter 34 supplies the digital values corresponding to the arithmetic mean values $b_1 = (a_1 - a_2)/2$, $b_2 = (-a_2 + a_3)/2$, $b_3 = (a_3 - a_4)/2$, ..., $b_{22} = (-a_{22} + a_{23})/2$, $b_{23} = (a_{23} - a_{24})/2$, ..., as shown in Fig. 6B. Consequently, if the output of the digital filter 34 is converted by D/A conversion, an analog signal corresponding to the signal magnetic filed $H_S$ is obtained as shown in curve 37B of Fig. 6B.

In Fig. 5, another possibility is to take an inverter for inverting the output of the amplifier and to add a sample hold circuit to execute a sample hold operation of the output of the inverter, and an A/D converter to convert the output of the sample hold circuit in A/D conversion such that a rectangular wave signal from the rectangular wave generator 26 is supplied to the sample hold circuit 32 and the A/D converter 33. The rectangular wave signal from the rectangular wave generator 26 is phase-shifted by 180° and supplied to the sample hold circuit and the A/D converter both newly added, the rectangular wave signal from the rectangular wave generator 26 and the signal phase-shifted by 180° are supplied to the digital filter 34 to which outputs of the A/D converter 33 and the newly added A/D converter are to be supplied, and arithmetic mean values of the digital values from the A/D converter 33 and the newly added A/D converter regarding neighboring values on the time axis are taken in sequence in the digital filter 34.

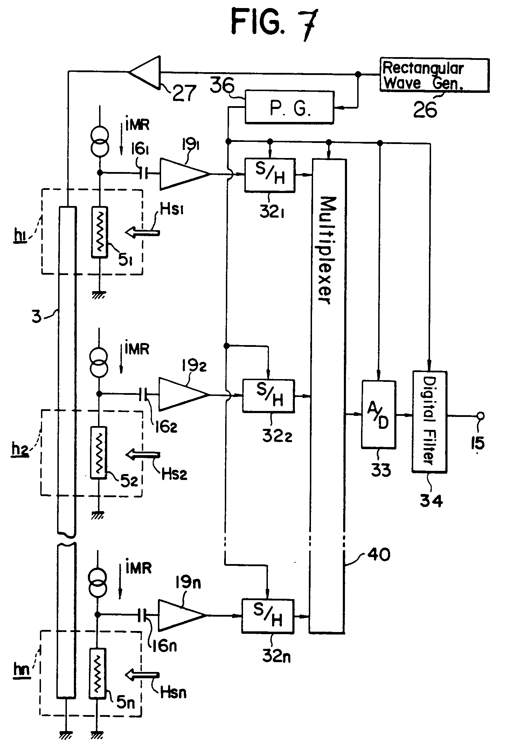

Another embodiment of a MR head apparatus will now be described referring to Fig. 7. The embodiment relates to a modification of the embodiment of Fig. 5 into a multi-channel structure, and parts in Fig. 7 corresponding to Fig. 5 are designated by the same reference numerals but with indices for indicating the respective channel, and the repeated description shall be partially omitted.

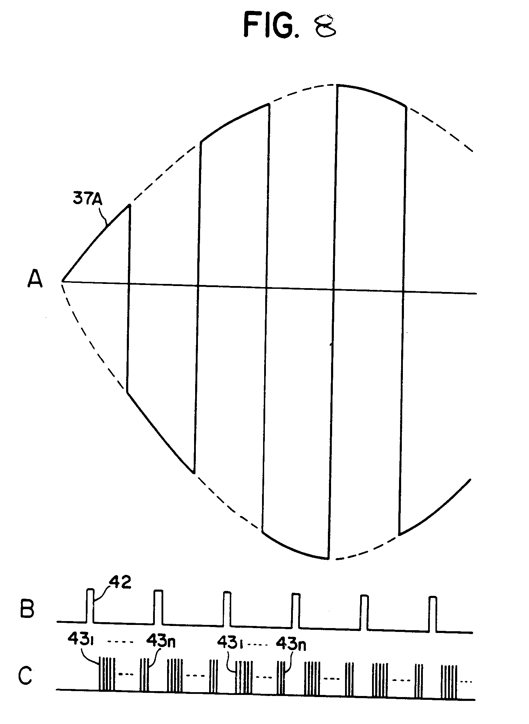

In Fig. 7, symbols $h_1$, $h_2$, ..., $h_n$ designate head elements of first, second, ..., n-th channels, respectively, and a bias conductor 3 is commonly used. In sample hold circuits $32_1$, $32_2$, ..., $32_n$, each output 37A (refer to Fig. 8A) of amplifiers $19_1$, $19_2$, ..., $19_n$ of respective channels which is supplied to the sample hold circuits $32_1$, $32_2$, ..., $32_n$ is sampled and held by sampling pulse signal 42 (refer to Fig. 8B) produced on the basis of a pulse signal from a pulse generator 36 with the frequency $2f_c$, and each hold output is supplied to a multiplexer 40.

In the multiplexer 40, analog outputs $43_1$, $43_2$, ..., $43_n$ (difference of level neglected) in every sampling of the sample-and-hold circuits $32_1$, $32_2$, ..., $32_n$ are converted into serial signals located at intermediate positions between sampling pulses as shown in Fig. 8C, and then the serial signals are supplied to an A/D converter 33 and the obtained digital signals are supplied to a digital filter 34. Thus, serial signals of digital arithmetic mean signals of various channels are obtained at an output terminal 15. If the output from the output terminal 15 is supplied to a demultiplexer, digital arithmetic mean signals per each channel, i.e., digital signals corresponding to the signal magnetic fields of the MR sensing elements $5_1$, $5_2$, ..., $5_n$ of each channel are obtained.

In Fig. 7, sample pulses to be supplied to the sample-and-hold circuits $32_1$, $32_2$, ..., $32_n$ of respective channels may have different phase by a prescribed amount in sequence, and outputs of the sample-and-hold circuits $32_1$, $32_2$, ..., $32_n$ of respective channels are supplied to the multiplexer 40 and added there so as to obtain a serial signal (refer to Fig. 8C).

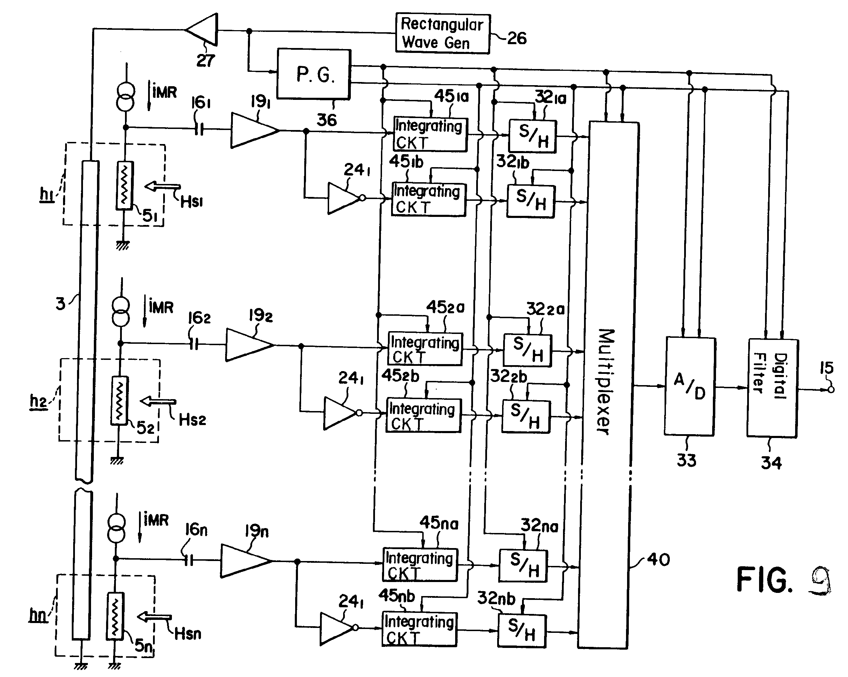

An embodiment of the invention will now be described referring to Fig. 9. Parts in Fig. 9 corresponding to Fig. 5 and Fig. 7 are designated by the same reference numerals, and' the repeated description shall be omitted. Outputs of amplifiers $19_1$, $19_2$, ..., $19_n$ of respective channels are supplied directly to integrating circuits $45_{1a}$, $45_{2a}$, ..., $45_{na}$ and also through inverters $24_1$, $24_2$, ..., $24_n$ to integrating circuits $45_{1b}$, $45_{2b}$, ..., $45_{nb}$. Outputs of the integrating circuits $45_{1a}$, $45_{2a}$, ..., $45_{na}$ and $45_{1b}$, $45_{2b}$, ..., $45_{nb}$ of the channels are supplied to sample-and-hold circuits $32_{1a}$, $32_{2a}$, ..., $32_{na}$ and $32_{1b}$, $32_{2b}$, ..., $32_{nb}$, respectively. Outputs of the sample-and-hold circuits $32_{1a}$, $32_{2a}$, ..., $32_{na}$ and $32_{1b}$, $32_{2b}$, ..., $32_{nb}$ are supplied to a multiplexer 40. The output of the multiplexer 40 is connected to a cascade circuit of an A/D converter 33 and a digital filter 34.

The rectangular wave signal from a rectangular wave generator 26 is supplied to a pulse generator 36 which produces two-phase rectangular wave signals being in synchronization with the rectangular wave signal from the rectangular wave generator 36 and having the same frequency and phase difference of 180° with each other. For example, the rectangular wave signal of non-inverted phase from the pulse generator 36 is supplied to the integrating circuits $45_{1a}$, $45_{2a}$, ..., $45_{na}$, the sample-and-hold circuits $32_{1a}$, $32_{2a}$, ..., $32_{na}$, the multiplexer 40, the A/D converter 33 and the digital filter 34. Also the rectangular wave signal of inverted phase from the pulse generator 36 is supplied to the integrating circuits $45_{1b}$, $45_{2b}$, $45_{nb}$, the sample-and-hold circuits $32_{1b}$, $32_{2b}$, ..., $32_{nb}$, the multiplexer 40, the A/D converter 33 and the digital filter 34.

In each output 37A (refer to Fig. 6A) of the amplifiers $19_1$, $19_2$, ..., $19_n$, portions corresponding to sample points $a_1$, $a_3$, ..., $a_{23}$, ... are integrated by the integrating circuits $45_{1a}$, $45_{2a}$, ..., $45_{na}$, and portions corresponding to sample points $a_2$, $a_4$, ..., $a_{24}$, ... are integrated by the integrating circuits $45_{1b}$, $45_{2b}$, ..., $45_{nb}$.

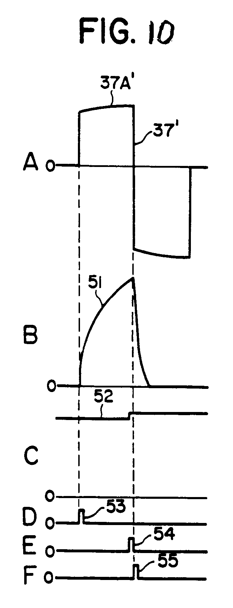

The operation of the integrating circuits and the sample-and-hold circuits in Fig. 9 will be described referring to Fig. 10. Fig. 10A shows output 37A of the amplifier, and a rectangular wave signal 37A' as a part of the output 37A is formed so that integration is started by integration set pulse 53 (refer to Fig. 10D) generated at the front edge. The integration output is sampled by sample pulse 54 (refer to Fig. 10E) generated immediately before the rear edge, and integration is reset by integration reset pulse 55 (refer to Fig. 10F) generated at the rear edge.

Outputs of the sample-and-hold circuits $32_{1a}$, $32_{2a}$, ..., $32_{na}$; $32_{1b}$, $32_{2b}$, ..., $32_{nb}$ of respective channels are converted into serial signals by the multiplexer 40, and then supplied to the A/D converter 33 and converted into digital signals and further supplied to the digital filter 34. In the digital filter 34, arithmetic mean value of neighboring data- on the time axis is estimated regarding the signal of each channel thereby a serial signal of digital arithmetic mean data is obtained at an output terminal 15. The serial signal from the output terminal 15 is supplied to a demultiplexer (not shown) and separated into data of individual channels, thereby digital signals of respective channels corresponding to the signal magnetic fields $H_{S1}$, $H_{S2}$, ..., $H_{Sn}$ of the channels are obtained.

In addition, each channel may be provided with one integrating circuit and one sample-and-hold circuit, and sign inversion of every alternate sample in sample data may be effected by the multiplexer 40 or the digital filter 34.

According to the invention as above described, a magnetoresistance effect type. magnetic head apparatus of a.c. bias system using a multiplier and a low pass filter is obtained so that a digital circuit and multi-channel circuit can be implemented easily.

Particularly, the output of the MR sensing element is integrated and then sampled and held, thereby S/N ratio of the reproduction signal can be increased.

A magnetoresistance effect type magnetic head apparatus in the examples of Figs. 7 and 9 comprises a magnetoresistance effect sensing element (MR sensing element) 5 to which a magnetic field is applied, an a.c. magnetic field generating means 3, 26 to apply the MR sensing element 5 with a.c. bias magnetic field, sample-and-hold circuits 32 to sample and hold the output of the MR sensing element 5 in synchronization with the a.c. bias magnetic field, an A/D converter 33 to effect A/D conversion of the output of the sample-and-hold circuits 32, and a digital filter 34 to which the digital signals form the A/D converter 33 are supplied, whereby the digital filter 34 produces a smoothed output of the digital signals with sign inversion in every alternate signal in response to the signal magnetic field.

The magnetoresistance effect type magnetic head apparatus of Fig. 9 is constituted so that outputs of MR sensing elements $5_1$, $5_2$, ..., $5_n$ in the magnetoresistance effect type magnetic head apparatus of Figs. 5 and 7 are supplied to integrating circuits $45_{1a}$, $45_{2a}$, ..., $45_{na}$ and $45_{1b}$, $45_{2b}$, ..., $45_{nb}$, and outputs of the integrating circuits are supplied to sample-and-hold circuits $32_{1a}$, $32_{2a}$, ..., $32_{na}$, $32_{1b}$, $32_{2b}$, ..., $32_{nb}$.

Consequently, in the first embodiment of Fig. 5, the output from the MR sensing element 5 is sampled and held in synchronization with the a.c. bias magnetic field whereby a multiplication is effected, and the sample hold output is supplied to the digital filter 34 and smoothed. The digital filter 34 provides the smoothed output of the digital output with sign inversion at every alternate sample in response to the signal magnetic field applied to the MR sensing element 5. Thus, as the circuit is implemented as a digital circuit, the circuit scale is not apt to become large in spite of an increase of the number of channels as in Fig. 7.

In the embodiment of Fig. 9, outputs of the MR sensing elements $5_1$, $5_2$, ..., $5_n$ are integrated and then sampled and held, whereby the S/N ratio of the reproduction signal is increased.

## Claims

1. Magnetic transducer head apparatus utilizing the magnetoresistance effect comprising:
   - at least one magnetoresistance effect sensing element (5) for sensing a signal magnetic field on a travelling magnetic recording medium;
   - a biasing means (6) for magnetically biasing said at least one sensing means;
   - means (16, 19; $16_1$, $19_1$; $16_1$, $19_1$, $24_1$, $45_{1a}$, $45_{1b}$) for obtaining an output signal from said at least one sensing element;
   - sample-hold means (32; $32_1$; $32_{1a}$, $32_{1b}$) for sampling and holding said output signal in synchronization with the sampling pulse;
   - means (33, 34) for calculating the difference between two successive output signals from said sample-hold means and for smoothing the difference; and
   - a generator means (36) for supplying said biasing means (6) with a high frequency biasing pulse and for supplying said sample-hold means with said sampling pulse, said sampling pulse having twice the frequency of said biasing pulse; characterized in that
   - said means for calculating said difference and for smoothing it comprises:
     -- A/D converter means (33) for converting the sampling output signals of said sample-hold means in synchronization with said sampling pulse; and
     -- digital filter means (34) supplied with the output signal of said A/D converter means (33) for deriving an output signal corresponding to the mean value of a converted sampling output signal and the inverted and converted sampling output signal next to said converted sampling output signal;
   - a plurality of said sensing elements with associated sample-hold means ($32_1$, $32_2$, ...) is provided and in that the outputs of said sample-hold means are supplied to a multiplexer (40) synchronized with said sample pulse, the output of said multiplexer (40) being supplied to said A/D converter means (33);
   - the output of each of said sensing elements is supplied to a first integrating circuit ($45_{1a}$, $45_{2a}$, ...) and via an inverter ($24_1$, $24_2$, ...) to a second integrating circuit ($45_{1b}$, $45_{2b}$, ...), said integrating circuits being synchronized with one phase each of a two-phase rectangular wave signal supplied by said generator means (36), the outputs of said integrating circuits are each applied to one of said sample/hold circuits ($32_{1a}$, $32_{1b}$, $32_{2a}$, $32_{2b}$, ...), and
   - the output of said multiplexer after A/D conversion and digital filtering is supplied to a demultiplexer for separating respective channels corresponding to the signal magnetic fields ($H_{S1}$, $H_{S2}$, ...) of a plurality of channels recorded on said travelling magnetic medium.

**Patentansprüche**

1. Magnetwandlerkopfvorrichtung unter Verwendung des Magnetowiderstandseffekts, mit:
   - mindestens einem Meßelement (5) mit Magnetowiderstandseffekt zum Messen eines Signalmagnetfelds auf einem laufenden magnetischen Aufzeichnungsmedium;
   - einer Vormagnetisierungseinrichtung (6), um das mindestens eine Meßelement vorzumagnetisieren;
   - einer Einrichtung (16, 19; $16_1$, $19_1$; $16_1$, $19_1$, $24_1$, $45_{1a}$, $45_{1b}$) zum Erhalten eines Ausgangssignals vom mindestens einen Meßelement;
   - einer Abtast-Halte-Einrichtung (32; $32_1$; $32_{1a}$, $32_{1b}$) zum Abtasten und Halten des Ausgangssignals synchron mit dem Abtastimpuls;
   - einer Einrichtung (33, 34) zum Berechnen der Differenz zwischen zwei aufeinanderfolgenden Ausgangssignalen aus der Abtast-Halte-Einrichtung und zum Glätten der Differenz; und
   - einer Generatoreinrichtung (36) zum Versorgen der Vormagnetisierungseinrichtung (6) mit einem hochfrequenten Vormagnetisierungsimpuls und zum Versorgen der Abtast-Halte-Einrichtung mit dem genannten Abtastimpuls, der die doppelte Frequenz wie der Vormagnetisierungsimpuls aufweist;

   **dadurch gekennzeichnet, daß**
   - die Einrichtung zum Berechnen der Differenz und zum Glätten derselben folgendes aufweist:
     -- eine A/D-Umsetzereinrichtung (33) zum Umsetzen der abgetasteten Ausgangssignale der Abtast-Halte-Einrichtung synchron mit dem Abtastimpuls und
     -- eine digitale Filtereinrichtung (32), der das Ausgangssignal der A/D-Umsetzereinrichtung (33) zugeführt wird, um ein Ausgangssignal zu erzeugen, das dem Mittelwert aus einem umgesetzten Abtastausgangssignal und dem invertierten und umgesetzten Abtastausgangssignal, das dem umgesetzten Abtastausgangssignal benachbart ist, entspricht;
   - mehrere der Meßelemente mit zugeordneten Abtast-Halte-Einrichtungen ($32_1$, $32_2$, ...) vorhanden sind und die Ausgangssignale der Abtast-Halte-Einrichtungen einem durch den Abtastimpuls synchronisierten Multiplexer (40) zugeführt werden, dessen Ausgangssignal der A/D-Umsetzereinrichtung (33) zugeführt wird;
   - das Ausgangssignal jedes der Meßelemente einer ersten Integrierschaltung ($45_{1a}$, $45_{2a}$, ...) und über einen Inverter ($24_1$, $24_2$, ...) einer zweiten Integrierschaltung ($45_{1b}$, $45_{2b}$, ...) zugeführt wird, wobei die Integrierschaltungen jeweils mit einer Phase eines zweiphasigen Rechtecksignals synchronisiert werden, das von der Generatoreinrichtung (36) geliefert wird, wobei die Ausgangssignale der Integrierschaltungen jeweils einer der Abtast-Halte-Schaltungen ($32_{1a}$, $32_{1b}$, $32_{2a}$, $32_{2b}$, ...) zugeführt werden; und
   - das Ausgangssignal des Multiplexers nach A/D-Umsetzung und digitaler Filterung einem Demultiplexer zugeführt wird, um jeweilige Kanäle zu trennen, die den Signalmagnetfeldern ($H_{S1}$, $H_{S2}$, ...) mehrerer Kanäle entsprechen, die auf dem laufenden magnetischen Medium aufgezeichnet sind.

**Revendications**

1. Appareil à tête de transducteur magnétique utilisant l'effet de magnétorésistance comprenant :
   - au moins un détecteur d'effet de magnétorésistance (5) pour détecter un champ magnétique de signal sur un support d'enregistrement magnétique défilant ;
   - un dispositif de polarisation (6) pour polariser magnétiquement au moins un desdits dispositifs de détection ;
   - un dispositif (16, 19 ; $16_1$, $19_1$ ; $16_1$, $19_1$, $24_1$, $45_{1a}$, $45_{1b}$) pour obtenir un signal de sortie au moins à partir dudit détecteur ;
   - un dispositif d'échantillonnage et de maintien (32, $32_1$, $32_{1a}$, $32_{1b}$) pour échantillonner et maintenir ledit signal de sortie en synchronisation avec l'impulsion d'échantillonnage ;
   - un dispositif (33, 34) pour calculer la différence entre deux signaux de sortie successifs dudit dispositif d'échantillonnage et de maintien et pour lisser la différence ; et
   - un dispositif générateur (36) pour fournir audit dispositif de polarisation (6) une impulsion de polarisation de fréquence élevée et pour fournir audit dispositif d'échantillonnage et de maintien ladite impulsion d'échantillonnage, ladite impulsion d'échantillonnage ayant deux fois la fréquence de ladite impulsion de polarisation ;

   caractérisé en ce que
   - ledit dispositif pour calculer ladite différence et pour la lisser comprend :

-- un dispositif convertisseur analogique/numérique (33) pour convertir les signaux de sortie d'échantillonnage dudit dispositif d'échantillonnage et de maintien en synchronisation avec ladite impulsion d'échantillonnage ; et

-- un dispositif de filtre numérique (34) recevant le signal de sortie dudit dispositif convertisseur analogique/numérique (33) pour dériver un signal de sortie correspondant à la valeur moyenne d'un signal de sortie d'échantillonnage converti et d'un signal de sortie d'échantillonnage inversé et converti voisin dudit signal de sortie d'échantillonnage converti ;

-- une pluralité desdits détecteurs associés au dispositif d'échantillonnage et de maintien ($32_1$, $32_2$, ...) est fournie et en ce que les sorties dudit dispositif d'échantillonnage et de maintien sont appliquées à un multiplexeur (40) synchronisé avec ladite impulsion d'échantillonnage, la sortie dudit multiplexeur (40) étant appliquée audit dispositif convertisseur analogique/numérique (33) ;

-- la sortie de chacun desdits détecteurs est appliquée à un premier circuit d'intégration ($45_{1a}$, $45_{2a}$, ...) et via un inverseur ($24_1$, $24_2$, ...) à un second circuit d'intégration ($45_{1b}$, $45_{2b}$, ...) lesdits circuits d'intégration étant synchronisés avec chaque phase d'un signal d'onde rectangulaire à deux phases fourni par ledit dispositif générateur (36), les sorties desdits circuits d'intégration sont chacune appliquées à un desdits circuits d'échantillonnage et de maintien ($32_{1a}$, $32_{1b}$, $32_{2a}$, $32_{2b}$, ...), et

-- la sortie dudit multiplexeur après conversion analogique/numérique et filtrage numérique est appliquée à un démultiplexeur pour séparer les canaux respectifs correspondant à des champs magnétiques de signal ($HS_1$, $H_{S2}$, ...) d'une pluralité de canaux enregistrés sur ledit support magnétique défilant.

## FIG. 1A

## FIG. 1B

## FIG. 2

# FIG. 3

# FIG. 4

# FIG. 5

# FIG. 6

EP 0 421 489 B1

# FIG. 7

# FIG. 8

FIG. 9

EP 0 421 489 B1

# FIG. 10